# EUROPÄISCHE PATENTSCHRIFT

(11) **EP 1 503 119 B1**
(45) Veröffentlichungstag und Bekanntmachung des Hinweises auf die Patenterteilung: **07.07.2010**
(21) Anmeldenummer: 04017052.4
(22) Anmeldetag: 20.07.2004
(51) Int. Cl.: F16K 15/04, F16K 27/02

(54) **Hochdruckpumpenventil mit austauschbaren Ventilsitzen**
High pressure pump valve with replaceable valve seats
Soupape de pompe à haute pression avec siège remplaçable

(30) Priorität: 28.07.2003 DE 20311689 U
(43) Veröffentlichungstag der Anmeldung: 02.02.2005
(73) Patentinhaber: Uhde High Pressure Technologies GmbH, 58093 Hagen (DE)
(72) Erfinder: Einhaus, Rolf, 58710 Menden (DE)

(56) Entgegenhaltungen:
- DE-A- 19 747 636
- GB-A- 2 278 186
- US-A- 4 655 247

## Beschreibung

Die Erfindung betrifft ein Hochdruckventil für pulsierende Fluidströme in Druckbereichen von 500 bis über 1.400 MPa und wobei die Ventilsitze im Ventilkörper als Kugelrückschlagventile ausgebildet und lösbar mit dem Ventilkörper verbunden sind. Dabei weist jeder Ventilsitz einen zylindrischen und einen konischen Teil auf, wobei die konisch verjüngte Seite metallisch mit dem Gegenkonus im Ventilkörper dichtet und die Steigungsdifferenz der Konusse maximal 2 Winkelgrad beträgt, ohne dass ein weiteres Dichtelement eingesetzt wird.

Hochkugeldruckventile für einen Einsatz in Druckbereichen von 500 MPa bis über 1400 MPa unterliegen beim Vorliegen einer Pulsationsströmung einem hohen inneren Verschleiß. Die im Leitungsweg angeordnete Kugel oszilliert in hoher Geschwindigkeit zwischen dem Ventilsitz, wobei der Leitungsweg verschlossen wird und einer gegenüberliegenden Begrenzung, die beispielsweise durch einen auf die Kugel wirkenden Stößel oder eine Arretierung gebildet wird. Weiterhin hat in dem genannte Druckbereich das geförderte Fluid selbst materialzerstörende Wirkung. Dabei gehört es zum Stand der Technik, diejenigen Bauteile, welche im besonderen Maße dem Verschleiß unterworfen sind, derart zu konstruieren, dass diese leicht austauschbar sind.

Aus DE 197 47 636 A1 ist bekannt, dass der Ventilkörper, welcher mindestens zwei innenliegende Kugelrückschlagventile umfasst, einerseits im freien Ende des Zylinders einer Hochdruckpumpe, andererseits in einem Joch zur Ventilaufnahme gelagert ist. Dieses Joch wird mit der Hochdruckpumpe über außenliegende Spannschrauben verspannt, so dass ein einfacher und schneller Austausch des Ventilkörpers möglich ist. Nachteilig an der in DE 197 47 636 A1 offenbarten Erfindung ist die Tatsache, dass der Bereich, in welchem der größte Verschleiß erfolgt, nicht separiert werden kann, so dass immer der komplette Ventilkörper und nicht nur die verschlissenen innenliegenden Kugelrückschlagventile ausgetauscht werden müssen.

Aus DE 37 21 390 C1 ist ein Hochdruckventil bekannt, in welchem der Hub der Kugel auf der einen Seite durch eine eine zentrische Bohrung umfassende Büchse und am anderen Ende durch einen Stößel begrenzt wird. In der dort offenbarten Erfindung wird der am stärksten dem Verschleiß unterliegende Teil, nämlich die Wand entlang des Hubweges der Kugel, aus einem Ring aus verschließfestem Material gebildet, welcher die Ventilkugel aufnimmt. Die Kugel verschließt den Leitungsweg, indem sie auf der Kante der zentrischen Bohrung der Büchse aufliegt. Das Fluid strömt axial durch diese Bohrung in das Ventil ein und verlässt über einen Ringkanal und eine Bohrung radial das Ventilgehäuse.

Nachteilig an dieser Konstruktion ist der mehrteilige Aufbau aus Büchse, Ring, Ventilgehäuse und Ventilkörper. Bei der Herstellung sind die axiale Bohrung des Ventilgehäuses hochpräzise mit der Ringaußenfläche und dessen axialen Bohrung sowie der Büchsenaußenfläche und deren axialen Bohrung vorzunehmen, damit die pulsierende Kugel exakt und spielfrei auf der Bohrung der Büchse zum Liegen kommt. Dies erfordert einen hohen Fertigungsaufwand. Weiterhin kritisch an der in DE 37 21 390 offenbarten Erfindung ist die mehrfache Umlenkung des Fluids im Ventilkörper. Bei Drücken bis über 500 MPa besteht die Gefahr, dass das Basismaterial durch aufprallende Fluidströme geschädigt wird.

Ventile mit eingeschraubten Ventilkörpern sind beispielsweise aus DE 2 259 549 C1, DE 296 04 196 U1 oder EP 0 408 177 A1 bekannt. Alle diese Ventilkörper sind derart aufgebaut, dass das durchströmende Medium neben der Umströmung der Kugel, welche nicht zu vermeiden ist, aufgrund Querschnittsveränderungen oder Bohrungen an mehreren Kanten vorbei strömt. Diese Bauweise ist für Hochdruckanwendungen nachteilig, aufgrund der Gefahr von Materialabtrag oder -zerstörung.

Weiterhin nachteilig für Hochdruckanwendungen ist das im Stand der Technik der vorgenannten Schriften offenbarte Dichtungssystem, welches in der üblichen Bauform als planparallele Fläche mit integriertem Dichtelement ausgeführt ist. Hier besteht die Gefahr, dass schon kleine Unebenheiten zur Ausbildung von Bypassströmungen führen, die, wenn sie in Bereiche mit geringerem Druckniveau führen und auf Innenwandungen treffen, Materialabtrag auslösen.

Aufgabe der Erfindung ist es daher, den Aufbau des Hochdruckventils derart zu gestalten, dass die Komponenten mit hohem Verschleiß einzeln und mit geringem Arbeitsaufwand entnommen werden können, wobei diese Verschleißteile derart aufgebaut sein müssen, dass sie sehr geringe Angriffsfläche für die interne Materialzerstörung bieten.

Diese Aufgabe wird gemäß der Erfindung durch eine Hochdruckventil mit den Merkmalen des Hauptanspruchs erreicht. Vorteilhafte Weiterentwicklungen der Vorrichtung gehen aus den abhängigen Ansprüchen hervor.

Die vorliegende Erfindung löst die oben genannte Aufgabe dadurch, dass das Hochdruckventil aus einem einen Einlass und einen Auslass aufweisenden Ventilkörper besteht, an welchem der Zylinderraum einer Pumpenkolbenstange angeschlossen ist, wobei der Einlass mit dem Zylinderraum über eine Bohrung verbunden ist, in welcher ein erster Ventilsitz mit einer Ventilkugel angeordnet ist, und weiterhin der Zylinderraum über eine weitere Bohrung mit dem Auslass verbunden ist, in welcher ebenfalls ein Ventilsitz mit einer Ventilkugel angeordnet ist, wobei die Ventilsitze mit der jeweiligen Ventilkugel in einer baulichen Einheit als Kugelrückschlagventile ausgebildet und lösbar sowie metallisch dichtend mit dem Ventilkörper verbunden sind.

Dabei weist jeder Ventilsitze einen zylindrischen und einen konischen Teil auf, und die Bohrung zur Aufnahme des Ventilsitzes im Ventilkörper weisen ebenfalls einen konischen und einen zylindrischen Teil auf. Die Oberflächen der beiden konischen Teile stellen dabei metallische Dichtflächen dar, welche im eingebauten Zustand der Ventilsitze im Ventilkörper metallisch dichten miteinander verbunden sind.

Ferner ist die Steigung des Gesamtöffnungswinkels der beiden Konusse derart gewählt, dass eine Steigungsdifferenz der Konusse vorliegt und diese Differenz maximal 2 Winkelgrad beträgt und vorteilhafterweise kleiner oder gleich einem Winkelgrad ist. Damit wird eine metallisch dichtende Fläche erzeugt. In einer idealen Ausführungsform sind keine weiteren metallischen oder nichtmetallischen Dichtungselemente erforderlich.

Weiterhin besteht eine vorteilhafte Ausführungsform darin, dass mindestens auf einer Teilfläche des zylindrischen Teils des Ventilsitzes ein Gewinde angeordnet ist, womit ein sehr leichter und schneller Ein- und Ausbau der Ventilsitze möglich ist. Damit sind bezüglich der Herstellung der äußeren Form der Ventilkörper keine besonders aufwändigen Fertigungsverfahren anzuwenden.

Die Konstruktion der Ventilsitze als eigenständige bauliche und rotationssymmetrische Einheit mit einer konischen Dichtfläche, hat den großen Vorteil, dass die Herstellung der sehr präzise aufeinander abzustimmenden inneren axialen Bohrungen des Kugelventils als solche, sowie die der äußeren Dichtflächen sehr wirtschaftlich erfolgen kann, wobei eine aufwändige Anpassung an den Ventilkörper nicht erforderlich ist.

Durch diese Kompaktheit der Ventilsitze, den Wegfall von Dichtelelementen und Positionierung axial zum Leitungsweg, durchfließt das zu fördernde Medium auch im Ventilbereich eine sehr umlenkungs- und störungsarme Wegstrecke. Somit sind die Angriffsflächen beziehungsweise die Gefahren für inneren Materialabtrag oder innere Leckagen minimiert.

Der Erfindungsgegenstand wird nun anhand in der Zeichnung dargestelltem Ausführungsbeispiele näher beschrieben. In der Zeichnung zeigt
die Fig. 1 den Ventilkörper mit beiden Kugelrückschlagventilen und der Kolbenstange der Hochdruckpumpe und
die Fig. 2a und 2b je eine Detailansicht des Kugelrückschlagventils in der Saugleitung

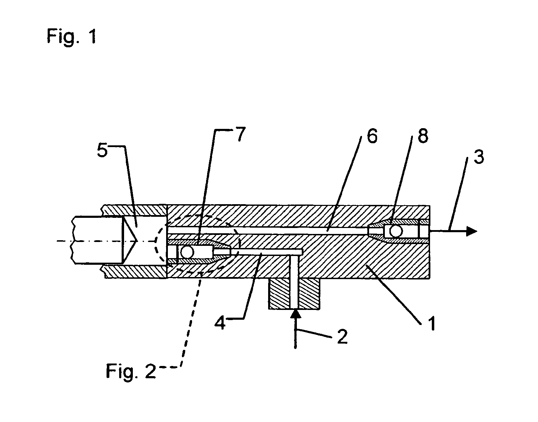

Das in der Fig. 1 dargestellte Hochdruckventil 1 weist einen Einlass 2 und einen Auslass 3 auf. Der Einlass 2 ist über eine Saugleitung 4 mit dem Zylinderraum 5 verbunden, in welchem die Kolbenstange einer nicht weiter dargestellten Hochdruckpumpe geführt wird. Der Zylinderraum 5 ist weiterhin mit dem Auslass 3 über eine Hochdruckleitung 6 verbunden. In der Saugleitung 4 und der Hochdruckleitung 6 sind je ein im Wesentlichen baugleiches Kugelrückschlagventil 7 und 8 angeordnet.

Wie in Fig. 1 dargestellt, sind die Kugelrückschlagventile 7 und 8 im Wesentlichen umlenkungsfrei in der Saugleitung 4 beziehungsweise in der Hochdruckleitung 6 angeordnet.

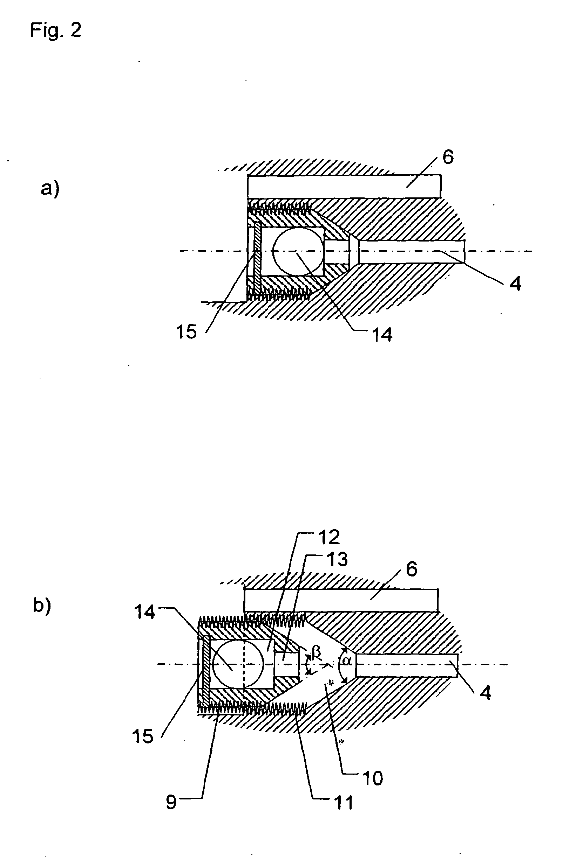

Wie in der Detailansicht in Fig. 2a und Fig. 2b gezeigt, besteht das Kugelrückschlagventil 7 aus einem rotationssymmetrischen Ventilkörper, welcher aus einem zylindrischen und einem konischen Teil besteht. In Fig. 2b ist zu erkennen, dass auf dem zylindrischen Teil ein Außengewinde 9 aufgebracht ist. Das dazugehörige Gegengewinde ist auf der Innenseite der Aussparung 10 als Innengewinde 11 angeordnet. Wie weiterhin in Fig. 2b gezeigt, weist der konische Teil des Kugelrückschlagventils 7 einen Öffnungswinkel β auf, wobei die Aussparung 10 zur Saugleitung 4 hin einen Konus mit dem Öffnungswinkel α aufweist. Die beiden Konusflächen dichten im eingebauten Zustand metallisch ab, da α im dargestellten Beispiel um ca. 1 Winkelgrad kleiner ist als β.

Wie in Fig. 2 dargestellt, weist das Kugelrückschlagventil 7 eine durchgängige axiale Bohrung auf, die vorrangig im zylindrischen Teil des Ventilkörpers einen dem Kugeldurchmesser angepassten Durchmesser 12 aufweist, und im Bereich des Konus einen im Wesentlichen der Saugleitung entsprechenden Durchmesser 13 aufweist, welcher kleiner als der Kugeldurchmesser ist. Die Kugel 14 ist in der Bohrung im Bereich des Durchmessers 12 positioniert, wobei der Hub der Kugel 14 zur Saugleitung hin durch den als Materialkante ausgebildeten Ventilsitz und zum Zylinderraum 5 durch einen lösbaren Arretierstift 15 begrenzt wird.

Das Kugelrückschlagventil 8 der Hochdruckleitung 6 ist in analoger Weise aufgebaut und nicht gesondert in einer Detailansicht dargestellt, wobei das Kugelrückschlagventil 8 derart im Ventilkörper angeordnet ist, dass es unter Einwirkung der Plungerbewegung beim Verschluss des Kugelrückschlagventils 7 die Strömung freigibt und umgekehrt.

Weiterhin in den Detailansichten der Fig. 2a der Ventilsitz im eingebauten und in Fig. 2b im halb ausgebauten Zustand dargestellt, womit deutlich wird, wie leicht der Ventilsitz mittels der Schraubverbindung als Ganzes aus- beziehungsweise eingebaut werden kann.

### Bezugszeichenliste

- 1: Hochdruckventil
- 2: Einlass
- 3: Auslass
- 4: Saugleitung
- 5: Zylinderraum der Pumpenstange
- 6: Hochdruckleitung
- 7: Kugelrückschlagventile
- 8: Kugelrückschlagventil
- 9: Außengewinde
- 10: Aussparung
- 11: Innengewinde
- 12: Durchmesser
- 13: Durchmesser
- 14: Kugel
- 15: Arretierstift
- α: Öffnungswinkel
- β: Öffnungswinkel

## Patentansprüche

1. Hochdruckventil (1) für eine Hochdruckpumpe mit einem einen Einlass (2) und einen Auslass (3) aufweisenden Ventilkörper (1), an welches der Zylinderraum einer Pumpenkolbenstange (5) angeschlossen ist, wobei der Einlass (2) mit dem Zylinderraum (5) über eine Bohrung verbunden ist, in welcher ein erster Ventilsitz (7) mit einer Ventilkugel (4) angeordnet ist, und weiterhin der Zylinderraum (5) über eine weitere Bohrung (6) mit dem Auslass (3) verbunden ist, in welcher ebenfalls ein Ventilsitz (8) mit einer Ventilkugel (14) angeordnet ist, wobei die Ventilsitze (7, 8) mit der jeweiligen Ventilkugeln (14) in einer baulichen Einheit als Kugelrückschlagventile ausgebildet und lösbar mit dem Ventilkörper (1) verbunden sind, **dadurch gekennzeichnet, dass** jeder der Ventilsitze (7, 8) einen zylindrischen und einen konischen Teil aufweist, und jede Bohrung (4, 6) zur Aufnahme eines Ventilsitzes im Ventilkörper ebenfalls einen konischen und einen zylindrischen Teil aufweist, wobei die Oberflächen der beiden konischen Teile die metallischen Dichtflächen bilden, welche im eingebauten Zustand der Ventilsitze (7, 8) im Ventilkörper (1) metallisch dichtend miteinander verbunden sind und
**dass** die Steigungsdifferenz der beiden metallisch dichtenden Konusse maximal zwei Winkelgrand beträgt und idealerweise gleich oder kleiner als ein Winkelgrad ist.

2. Vorrichtung nach einem der Ansprüche 1 oder 2, **dadurch gekennzeichnet, dass** im Übergangsbereich zwischen dem konischen Ende des Ventilsitzes (7, 8) zum Ventilkörper (1) kein zusätzliches metallisches oder nicht-metallisches Dichtelement angeordnet ist.

3. Vorrichtung nach einem der Ansprüche 1 bis 3, **dadurch gekennzeichnet, dass** mindestens auf einer Teilfläche des zylindrischen Teils des Ventilsitzes (7, 8) ein Gewinde (9) angeordnet ist und die Bohrung (4, 6) des Ventilkörpers in diesem Bereich als das entsprechende Gewindegegenstück (11) ausgebildet ist.

## Claims

1. High-pressure valve 1 for a high-pressure pump, with a valve body 1 having an inlet 2 and an outlet 3, said valve being connected to the cylinder chamber of a plunger rod 5, the inlet 2 being connected to said cylinder chamber 5, via a bore accommodating a first valve seat 7 and its ball 4, and the said chamber 5 communicating with the outlet 3 via another bore 6 likewise equipped with a valve seat 8 and its ball 14, the said components constituting a common assembly forming a ball check valve and fitted to the valve body 1 in a detachable manner,
**characterised in that** each valve seat has a cylindrical and a conical part as well as a bore 4/6 intended for the accommodation of a valve seat in the valve body, likewise with a conical and a cylindrical part, the face surfaces of the two tapered cones forming a metallic sealing system which, upon assembly of seats 7/8, form a tight seal with each other in valve body 1, and **in that** there is a difference in gradient between the two tapered cones forming the male/female metallic seal and the said difference is 2° of angle max. and preferably ≤1° of angle.

2. Device according to Claim 1,
**characterised in that** the transitional area between the tapered end of the valve seat 7/8 and valve body 1 requires no additional metallic or non-metallic sealing element.

3. Device according to any of the preceding Claims 1 or 2"
**characterised in that** a thread is arranged in at least one partial section of the valve seat 7/8 and **in that** the bore 4/6 of the valve body is provided as the matching counter-part (male / female).

## Revendications

1. Vanne haute pression (HP) 1 pour une pompe HP, avec un corps de vanne 1 doté d'une entrée 2 et d'une sortie 3 ; la dite vanne est liée à la chambre cylindrique d'une tige de piston de pompe 5 et l'entrée 2 est connectée à la chambre cylindrique 5, par un alésage qui donne logement à un premier siège de vanne 7, avec la bille 4, et la chambre cylindrique 5 est d'ailleurs connectée à la sortie 3, par un autre alésage qui également donne logement à un siège de vanne 8, avec la bille 14 ; les dits sièges 7/8 avec les billes 14 constituent un ensemble modulaire comme vanne d'arrêt à bille, le dit ensemble étant monté sur le corps de vanne, à l'aide d'un assemblage démontable,
**caractérise en ce que** chaque siège de vanne 7/8 est constitué d'un composant cylindrique et conique et que chaque alésage 4/6 sert de compartiment pour un siège de vanne dans le corps de vanne 1, également avec un composant cylindrique et conique ; les faces de ces deux composants coniques forment un assemblage d'étanchéité métallique mâle/femelle, qui en état monté, ne nécessite aucun joint d'étanchéité, que ce soit, et que la différence d'inclinaison entre les deux composants coniques, qui forment l'assemblage d'étanchéité métallique, est de 2° d'angle max. et préférablement de ≤1° d'angle.

2. Dispositif selon la revendication No. 1,
**caractérisé en ce que** le secteur de transition entre les deux extrémités du siège de vanne 7/8 et le corps de vanne 1 ne nécessite aucun joint d'étanchéité additionnel métallique ou non métallique, que ce soit.

3. Dispositif selon l'une des revendications précédentes Nos. 1 ou 2,
**caractérisé en ce que** le filetage est disposé au moins dans une partie du siège de vanne 7/8 et que l'alésage 4/6 du corps de vanne 1 est réalisé comme l'élément pendant (mâle / femelle).
